(19) Europäisches Patentamt
European Patent Office
Office européen des brevets

(11) **EP 0 946 855 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.[7]: **G01B 9/04**, G02B 21/16, G02B 21/34

(21) Anmeldenummer: **97953660.4**

(22) Anmeldetag: **20.12.1997**

(86) Internationale Anmeldenummer:
**PCT/DE97/02994**

(87) Internationale Veröffentlichungsnummer:
**WO 98/28592 (02.07.1998 Gazette 1998/26)**

(54) **VERFAHREN UND VORRICHTUNGEN ZUR DISTANZMESSUNG ZWISCHEN OBJEKTSTRUKTUREN**

METHOD AND DEVICES FOR MEASURING DISTANCES BETWEEN OBJECT STRUCTURES

PROCEDE ET DISPOSITIFS DE TELEMETRIE ENTRE DES STRUCTURES D'OBJETS

(84) Benannte Vertragsstaaten:
**DE**

(30) Priorität: **23.12.1996 DE 19654824**
**03.02.1997 DE 29701663 U**

(43) Veröffentlichungstag der Anmeldung:
**06.10.1999 Patentblatt 1999/40**

(73) Patentinhaber: **Ruprecht-Karls-Universität Heidelberg**
**69117 Heidelberg (DE)**

(72) Erfinder:
• **CREMER, Christoph**
  **D-69126 Heidelberg (DE)**
• **HAUSMANN, Michael**
  **D-67071 Ludwigshafen (DE)**
• **BRADL, Joachim**
  **D-69198 Schriesheim (DE)**
• **RINKE, Bernd**
  **D-66459 Kirkel (DE)**

(74) Vertreter: **Rudolph, Ulrike, Dr.**
**Patentanwältin**
**In der Schanz 10**
**69198 Schriesheim (DE)**

(56) Entgegenhaltungen:
**DE-A- 3 226 407        DE-B- 2 613 582**
**US-A- 3 401 458        US-A- 4 650 335**
**US-A- 5 414 258**

**Beschreibung**

Die Erfindung betrifft ein Verfahren und Vorrichtungen für die Fernfeldmikroskopie und Flußfluorometrie zur geometrischen Distanzmessung zwischen fluorochrommarkierten Objektstrukturen, wobei die Distanzen geringer sein können als die Halbwertsbreite des Hauptmaximums der effektiven Punktbildfunktion.

**Stand der Technik :**

Durch den Einsatz hochspezifischer Marker, wie z.B. DNA-Proben oder Protein-Sonden, ist es möglich, in biologischen (Mikro-)Objekten, insbesondere in Zellen, Zellkernen, Zellorganellen oder auf Chromosomen (im Folgenden abkürzend auch Objekt genannt), nahezu beliebig kleine (Sub-)Strukturen zu markieren. Solche Marker können Strukturen in Dimensionen von einigen $\mu$m ($10^{-6}$ m) bis zu wenigen zehn $\mu$m ($10^{-9}$ m) spezifisch darstellen. Üblicherweise werden in diese Marker Reportermoleküle eingebunden, die eine hohe Affinität zu entsprechenden Komplexverbindungen tragen, an die Fluorochrome, aber auch kolloidale Mikropartikel (z.B. Gold) angebunden sind. Es können aber auch solche Fluorochrome/Komplexe direkt in die Marker eingebaut werden. Das zur Verfügung stehende Farbemissionsspektrum der Fluorochrome reicht vom tief blauen über grün, rot bis in den infraroten Spektralbereich. Ebenso können Fluorochrome verwendet werden, die sich nicht in ihrem Spektrum der Anregung und/oder Fluoreszenzemission unterscheiden, sondern bei denen die Lebensdauer ihrer Fluoreszenzemission als Parameter zur Unterscheidung genutzt wird.

Letztere haben den Vorteil, daß wellenlängenabhängige fokale Shifts nicht auftreten. Fluorochrome können auch ein unterschiedliches Emissionsspektrum haben und damit verschiedene spektrale Signatur besitzen, aber mit derselben Photonenenergie angeregt werden, z.B. durch Mehrphotonenprozesse. Auch in diesem Fall können wellenlängenabhängige fokale Shifts in der Anregung zwischen Fluorochromen verschiedener spektraler Signatur vermieden werden.

Die oben genannten, an spezifische (Sub-)Strukturen in biologischen Mikroobjekten gebundenen Fluorochrome werden im folgenden als Fluoreszenzmarker bezeichnet. Unter Fluoreszenz wird im folgenden jede Photonenwechselwirkung verstanden werden, bei der zwischen dem Anregungsspektrum und dem Emissionsspektrum eines Stoffes Unterschiede auftreten, die nicht auf monochromatische Absorption oder Streuung zurückgeführt werden können. Dies schließt insbesondere auch Mehrphotonenwechselwirkungen ein, bei denen die Anregungswellenlängen größer sein können als die Emissionswellenlängen. Ferner wird hier der Begriff Fluoreszenz auch für die eng damit verwandten Phänomene der Lumineszenz, insbesondere die Phosphoreszenz verwendet. Dies schließt insbesondere längere mittlere Fluoreszenzlebensdauern ein, z.B.

Fluoreszenzlebensdauern im Bereich von bis zu mehreren oder vielen msec (Millisekunden). Im folgenden werden die eng verwandten Vorgänge der Luminizsenz, Phosphoreszenz und Fluoreszenz als gleichermaßen erfindungsrelevant angesehen. Stimmen Anregungsspektrum und/oder Emissionsspektrum und/oder die Fluoreszenzlebensdauern zweier Fluoreszenzmarkern überein, so haben sie hinsichtlich der jeweiligen Parameter die gleiche spektrale Signatur. Unterscheiden sie sich in einem oder mehreren für die Messung relevanten Parametern, so habe sie unterschiedliche spektrale Signatur.

Für die Detektion der Fluoreszenzmarker in ausgedehnten biologischen Objekten und für die quantitative Lokalisation bezüglich definierter Objektpunkte/ Objektstrukturen (Distanz- und Winkelmessungen) werden eine Reihe von lichtmikroskopischen Meßverfahren eingesetzt. Hierbei handelt es sich vor allem um (a) die Epifluoreszenzmikroskopie, (b) die Konfokale Laser-Scanning-Mikroskopie, (c) die Laser-Scanning Flußfluorometrie, (d) das Fernfeldmikroskopieverfahren des "Point-Spread-Function-Engineerings" und (e) die Wellenfeldmikroskopie.

a) Bei der Epifluoreszenzmikroskopie mit einem klassischen aufrechten oder inversen Epifluoreszenzmikroskop wird das biologische Objekt durch dasselbe Objektiv beleuchtet, durch das es auch detektiert wird. Anregungslicht und emittierte Fluoreszenz werden durch entsprechende optische Filter spektral diskrimiert und in verschiedenen Strahlengängen geführt. Die erzielbare Auflösung, d.h. die kleinste noch meßbare Distanz zwischen zwei punktförmigen Objektstrukturen, die mit Fluorochromen gleicher spektraler Signatur markiert sind, ist entweder durch das Abbe-Kriterium (= das Maximum 0 Ordnung des Beugungsbildes eines Punktobjektes ist im 1. Minimum des Beugungsbildes eines zweiten Punktobjektes lokalisiert) oder durch die Halbwertsbreite des Hauptmaximums der effektiven Punktbildfunktion gegeben. Diese hängt von der jeweiligen Wellenlänge, der Numerischen Apertur des verwendeten Objektivs, sowie von den lokalen Brechzahlen der Objekte, des Einbettungsmediums, der eventuell verwendeten Deckgläser und der eventuell eingesetzter Immersionsflüssigkeiten ab (Ihre Dimension kann bei hoher Numerischer Apertur geringer als die Wellenlänge des zur Anregung verwendeten Lichtes sein.)

b) Bei der konfokalen Laser-Scanning-Mikroskopie wird im Gegensatz zur Epifluoreszenzmikroskopie ein Laser in das Objekt fokussiert und die Fluoreszenz konfokal detektiert. Zur Erzeugung eines dreidimensionalen Bildes wird das Objekt mit dem Fokuspunkt in allen drei Raumrichtungen (x, y, z) abgerastert. Die erzielbare Auflösung ist wie bei der Epifluoreszenzmikroskopie durch die Halbwertsbreite des Hauptmaximums der effektiven Punktbildfunktion gegeben und hangt von der jeweiligen Wellenlänge, der Numerischen Apertur des verwendeten Objektivs, sowie von den lokalen Brechzahlen der Objekte, des Einbettungsmediums, der eventuell verwendeten Deckgläser und der eventuell eingesetzter Immersionsflüssigkeiten ab.

c) Bei der Laser-Scanning Flußfluorometrie werden die Objekte beispielsweise durch einen freien oder in einer Küvette befindlichen Trägerflüssigkeitsstrahl einzeln durch eine entsprechende Lichtverteilung eines Fokus geführt (während bei der Epifluoreszenzmikroskopie und der konfokale Laser-Scanning-Mikroskopie die Objekte auf Objekthaltern, d h. Objektträgerplättchen, -trägerkapillaren, -trägerkammern, -trägerflüssigkeiten u.a., fixiert vorliegen). Die Lichtverteilung ist üblicherweise spaltförmig, d.h. das Objekt wird bezüglich einer Achse gerastert. Die erzielbare Auflösung ist durch die Fokusbreite des verwendeten Laserstrahls und/oder geeignet gewählter Detektionsblenden bestimmt, wobei die Variabilität in der Objekttrajektorie (= laminarer, üblicherweise zentraler "Flüssigkeitsfaden", der die Objekte trägt), abhängig vom Tragermedium und -verfahren, die Fokustiefe und damit auch die minimale Fokusbreite vorgibt Der Vorteil von Flußfluorometrieverfahren liegt üblicherweise in der gegenüber der Epifluoreszenzmikroskopie und der konfokalen Laser-Scanning-Mikroskopie wesentlich höheren zeitlichen Detektionsrate, die bis zu einigen tausend Objekten pro Sekunde reichen kann. Die Fokusbreite entspricht der Halbwertsbreite des Hauptmaximums der effektiven Punktbildfunktion der Slit-Scan Optik unter den verwendeten Bedingungen.

d) Bei den Fernfeldmikroskopieverfahren des "Point-Spread-Function-Engineerings": wird die Punktbildfunktion optisch geschmälert. Dies kann durch kohärente Überlagerung von zwei und mehreren Punktbildfunktionen erfolgen (z.B. 4Pi-Mikroskopie) oder durch Auslöschen der Fluoreszenz von Fluorochromen, die sich im Randbereich des jeweiligen zentralen Punktbildfunktionsmaximums befinden (z.B. STED-Mikroskopie, Ground-Depletion-Mikroskopie). Da die Auflösung eines Mikroskops durch die Halbwertsbreite des Hauptmaximums der effektiven Punktbildfunktion gegeben wird, wird somit die Halbwertsbreite verringert und die Auflösung verbessert.

e) Bei der Wellenfeldmikroskopie gemäß dem US-Patent Nr. 4,621,911 werden lumineszente Präparate im optischen Mikroskop mit einem stehenden Wellenfeld beleuchtet (Standing Wave Field Fluorescence Microscopy, SWFM). Die Präparate werden in einer Zone äquidistanter ebener Wellenfronten angeordnet und zur Fluoreszenz oder Phosphoreszenz angeregt. Der Abstand der Wellenfronten und ihre Phase können zur Bilderzeugung variiert werden. Aus einzelnen optischen Schnitten kann durch Computer-Bildverarbeitung die dreidimensionale Verteilung der fluoreszenten bzw. lumineszenten Objektpunkte rekonstruiert werden. Die ebenen Wellenfronten werden durch kohärente Überlagerung zweier Laserstrahlen unter einem definierten Winkel zur optischen Achse des Mikroskopsystems erzeugt, wobei der Winkel den Abstand der Wellenfronten untereinander bestimmt — bei gegebener Wellenlänge und Brechungsindex. An Stelle von zwei sich kreuzenden Laserstrahlen kann das Wellenfeld auch dadurch erzeugt werden, daß ein Laserstrahl nach geeigneter Reflexion unter einem bestimmten Winkel mit sich selbst zur Interferenz gebracht wird. Im Mikroskopaufbau sind in diesem Falle die Wellenfronten senkrecht zur optischen Achse des detektierenden Objektives angeordnet. Die Fluoreszenz bzw Lumineszenz wird entweder wie beim Epifluoreszenzmikroskop durch entsprechende optische Filter spektral diskriminiert und in verschiedene Strahlengänge gerührt oder konfokal detektiert. Die erzielbare Auflösung ist wie bei der Epifluoreszenzmikroskopie und der Konfokalen-Laser-Scanning-Mikroskopie durch die Halbwertsbreite des Hauptmaximums der effektiven Punktbildfunktion gegeben und hängt von der jeweiligen Wellenlänge, der Numerischen Apertur des verwendeten Objektivs, sowie von den lokalen Brechzahlen der Objekte, des Einbettungsmediums, der eventuell verwendeten Deckgläser und der eventuell eingesetzter Immersionsflüssigkeiten ab.

Lateral besitzt das System eine Auflösung wie ein übliches Epifluoreszenzmikroskop oder Konfokales Laser Scanning Mikroskop; in axialer Richtung dagegen wird eine Tiefendiskriminierung und damit wesentlich verbesserte Auflösung erzielt.

**Nachteile des Standes der Technik:**

1.) Da die effektiven Punktbildfunktionen stark beeinflußt werden von der jeweiligen lokalen Brechzahl und Absorption im Objekt, im Einbettungsmedium des Objektes und in der Immersion (einschließlich eventuell vorhandener Deckgläser), sind Distanzmessungen zwischen Objektstrukturen von der effektiven — d.h. der lokal im markierten Objektpunkt gegebenen — Punktbildfunktion abhängig. Diese unterscheidet sich im allgemeinen deutlich von berechneten Punktbildfunktionen des verwendeten Mikroskops. Auch die unter technisch optimierten Randbedingungen gemessenen Punktbildfunktionen unterscheiden sich in der Regel von den unter praktischen Routinelaborbedingungen in biologischen Objekten erzielbaren effektiven Punktbildfunktionen. Da diese effektiven Punktbildfunktionen meist nicht zur Verfügung stehen, greift man zur Kalibrierung der Distanzmessungen auf ideale, berechnete Ergebnisse zurück bzw. auf Kalibrierungsmessungen, die unter Standardbedingungen durchgeführt wurden, wie z.B. Reflexionsverfahren. Beide Verfahren erfolgen zu Lasten der Präzision bei der dreidimensionalen Distanzmessung in biologischen Mikroobjekten. Als Folge ergibt sich eine erhebliche Unsicherheit der Bestimmung der tatsächlichen räumlichen Distanz zwischen den Objektstrukturen; bei biologischen Objekten beinhalten quantitative Größenabschätzungen Unsicherheiten von bis zu mehreren Mikrometern Eine Korrektur dieses Fehlers ist bei den bisher verwendeten Methoden nur begrenzt möglich, nämlich nur unter Standardbedingungen, deren tatsächliche Realisierung/Einhaltung im biologischen Objekt jedoch nicht genau kontrolliert bzw. gewährleistet werden kann.

Zwei Objektstrukturen der gleichen spektralen Signatur können nur dann separiert werden, wenn sie mindestens eine Halbwertsbreite des Hauptmaximums der effektiven Punktbildfunktion von einander entfernt sind.

2.) Bei allen oben beschriebenen Fernfeld-Verfahren besteht das Problem, daß die Breite des Hauptmaximums der Punktbildfunktion und damit die Auflösungsgrenze von der relativen Lage im Raum abhängt. So ist z.B. bei der Epifluoreszenzmikroskopie oder der konfokalen Laser-Scanning-Mikroskopie die Punktbildfunktion lateral (senkrecht zur optischen Achse) schmäler als axial (in Richtung der optischen Achse). Bei statischen Mikroskopieverfahren kann dieser Nachteil zwar mit Hilfe der sog. Mikroaxialtomographie überwunden werden. Bei diesem Verfahren werden die (biologischen) Objekte in Kapillaren oder auf Glasfasern angeordnet und definiert im Mikroskop um eine Achse gedreht, die normalerweise senkrecht zur optischen Achse des Mikroskops steht. Dabei werden Abstandsmessungen in derjenigen Richtung durchgeführt, die die schmalste Halbwertsbreite der effektiven Punktbildfunktion besitzt. Bei der Flußfluorometrie ist dieses Verfahren jedoch kaum einsetzbar.

3.) Bei der "eindimensionalen" Wellenfeldmikroskopie (SWFM) führt das periodische Wellenfeld bei epifluoreszenter Detektion in Verbindung mit Verfahren des Optical Sectioning zu einer Mehrdeutigkeit in der Abbildung der Objektstrukturen größer als $\lambda/2n$ ($\lambda$=Wellenlänge der Anregung, n= effektiver Brechungsindex). Diese Mehrdeutigkeit erschwert zunächst eine effektive Nutzung der durch das Interferenzmuster erzielten Auflösungsverbesserung.

4.) Hochpräzisionsdistanzmessungen mit Lichtmikroskopie-Fernfeldverfahren gelten nach dem Stand der Technik nur bis in den Größenordnungsbereich hundert Nanometer durchfuhrbar. Für Messungen im Distanz- und Genauigkeitsbereich der Größenordnung 10 nm werden die Verfahren der Elektronenmikroskopie, Rastertunnelmikroskopie, atomare Rasterkraftmikroskopie, biologische und optische Nahfeldmikroskopie eingesetzt. Bei diesen Verfahren handelt es sich jedoch — im Gegensatz zu den optischen Fernfeldverfahren — um flächenorientierte und nicht volumenorientierte Meßverfahren; d.h. sie eignen sich im Prinzip nur für Strukturuntersuchungen und Distanzmessungen an Oberflächen und in dünnen Schichten. Informationen über die Lage von Objekten bzw. Objektstrukturen im dreidimensionalen Raum können allenfalls anhand von mechanisch präparierten Schnittserien und einer Auswertung von Messungen in Einzelbildern erhalten werden. Dreidimensionale Messungen in intakten oder gar vitalen biologischen Mikroobjekten, z.B. dreidimensionalen (konservierten) Zellen, Zellkernen oder Zellorganellen, sind nicht möglich.

## Aufgabe der Erfindung:

Der Erfindung liegt die Aufgabe zugrunde, ein Verfahren für die Fernfeldmikroskopie und eine Vorrichtung zur Durchführung dieses Verfahrens bereitzustellen, mit dem bzw. mit der es möglich ist, Distanzmessungen zwischen Objektstrukturen, deren Abstand voneinander geringer ist als das Auflösungsvermögen des betreffenden Fernfeldmikroskops, d.h. die weniger als die Halbwertsbreite des Hauptmaximums der effektiven Punktbildfunktion voneinander entfernt liegen, unabhängig von der Lage der betreffenden Objektstrukturen im dreidimensionalen Raum, mit hoher Genauigkeit durchzuführen

## Erfindungsgemäße Lösung dieser Aufgabe:

Eine Lösung dieser Aufgabe besteht in der Bereitstellung eines Verfahrens nach Anspruch 1.

Eine erfindungsgemäße Halterung für einen Objekthalter zur Durchführung des verfahrens ist im Anspruch 18 beansprucht.

• Vor, während oder nach der Präparation des betreffenden Objekts auf bzw. in einem Objekthalter, insbesondere Objektträgerplättchen, Objektträgerfaser/-kapillare oder Objektträgerflüssigkeit, werden die zu untersuchenden bzw. zu ortenden Strukturen (Meßstrukturen) mit Fluoreszenzfarbstoffen verschiedener und/oder gleicher spektraler Signatur markiert, d.h. solche zu ortende Strukturen (Meßstrukturen), die sich in unmittelbarer Nähe zueinander, nämlich innerhalb der Halbwertsbreite des Hauptmaximums ihrer effektiven Punktbildfunktion, befinden, werden mit Fluoreszenzfarbstoffen verschiedener spektraler Signatur markiert, während solche Meßstrukturen, deren Abstand voneinander größer ist als die Halbwertsbreite des Hauptmaximums der effektiven Punktbildfunktion, mit Fluoreszenzfarbstoffen verschiedener oder gleicher spektraler Signatur markiert werden. Zwei zu ortende Meßstrukturen dürfen immer dann mit der gleichen spektralen Signatur markiert sein, wenn sie z.B. durch ihre relative Lage oder durch andere Kriterien eindeutig identifiziert werden können.

- Mit den gleichen Fluoreszenzfarbstoffen werden Kalibriertargets definierter Größe und räumlicher Anordnung markiert,

- die fluoreszierenden Kalibriertargets werden entweder zusammen mit den Objekten oder separat auf bzw. in dem bzw. einem Objekthalter (Objektträgerplättchen, Objektträgerfaser/-kapillare, Objektträgerflüssigkeit o.a.) präpariert.

- (Untersuchungs-)Objekt und Kalibriertargets werden unter übereinstimmenden Bedingungen, gleichzeitig oder nacheinander mikroskopisch oder flußfluorometrisch untersucht.

- Jeweils zwei definierte Kalibriertargets verschiedener spektraler Signatur werden unter Berücksichtigung des wellenlängenabhängigen Abbildungs- und Lokalisationsverhaltens des jeweiligen optischen Systems (Mikroskop oder Flußfluorometer) vermessen, die dabei ermittelten Messwerte gleich Ist-Werte werden mit den vorbekannten tatsächlichen Distanzwerten gleich Soll-Werten (d.h. den aufgrund der Geometrie berechneten Solllokalisationen) verglichen, und die Differenz zwischen Ist-Werten und Soll-Werten, nämlich der Kalibrierwert, wird zur Korrektur des durch das optische System bedingten Versatzes in der Detektion unterschiedlicher Emissionsloci insbesondere der Meßstrukturen verwendet

Mit anderen Worten. Die Distanzmessung zwischen den (je nach Abstand voneinander) mit verschiedenen oder gleichen spektralen Signaturen markierten Objekt-(Sub-) Strukturen - im folgenden auch Meßstrukturen genannt - wird anhand der hochpräzisen Lokalisation unabhängiger (Kalibrier-)Targets mit entsprechend spektraler Signatur und mit bekannter Größe und räumlicher Anordnung, unter Berücksichtigung des wellenlängenabhängigen Abbildungs- und Lokalisationsverhaltens des jeweiligen optischen Systems durchgeführt, wobei die Kalibriermessung zwischen den (Kalibrier-) Targets und die Messung im biologischen Objekten unter gleichen System- und Randbedingungen stattfindet. Diese Kalibriertargets haben dieselbe oder eine höhere Multispektralität wie die zu messenden (Objekt-) Strukturen. Sie können direkt in den biologischen Objekten angeordnet sein, oder als separate Präparate auf einem Objekthalter (Objektträgerplättchen oder Objektträgerfaser/-kapillare oder Objektträgerflüssigkeit o.ä.) vorliegen oder Teil eines Objekthalters sein.

Zwei oder mehrere fluoreszierende Meßstrukturen in intakten, dreidimensionalen biologischen Objekten, deren Abstand und Ausdehnung kleiner als die Halbwertsbreite des Hauptmaximums der effektiven Punktbildfunktion ist, können aufgrund ihrer unterschiedlichen spektralen Signatur (Fluoreszenzabsorptionswellenlangen und/oder Fluoreszenzemissionswellenlängen und/oder Fluoreszenzemissionslebensdauern) diskriminiert werden, d.h. ihr Abstand untereinander kann bestimmt werden. Die Abstandsmessung wird auf die Lokalisation der einzelnen Meßstrukturen reduziert und kann — nun auch in der optischen Fernfeldmikroskopie oder Flußfluorometrie — mit einer wesentlich höheren Genauigkeit als die Halbwertsbreite des Hauptmaximums der Punktbildfunktion durchgeführt werden. Die Lokalisation des Schwerpunkts der betreffenden Meßstrukturen wird auf die Maximalintensität ihres Fluoreszenzsignals angepaßt. D. h. aus dem gemessenen (beugungsbegrenzten) Signals (=Intensitätskurve) eines Fluoreszenzpunktes (=fluoreszierende Meßstruktur) wird — unter Berücksichtigung der Gesamtinformation aus Haupt- und Nebenmaxima — der Schwerpunkt (das Baryzentrum) des Signals bestimmt und damit der Ort der Meßstruktur. Bei fehlerfreiem optischen System und infolgedessen idealer Symmetrie der gemessenen Intensitätsverteilung (=Verlauf der Intensitätskurve) kolokalisiert der Schwerpunkt (das Baryzentrum) der Intensitätskurve innerhalb der Lokalisationsgenauigkeit mit dem Hauptmaximum (=Maximim 0. Ordnung des Beugungsbildes) der gemessenen Intensitätsverteilung

**Vorteile der Erfindung:**

Das Verfahren erlaubt es mittels optischer Fernfeld-Mikroskopie bzw Scanning-Flußfluorometrie, geometrische Distanzen in biologischen Mikro-Objekten zu messen, wobei die zu bestimmenden Distanzen geringer sein können als die Halbwertsbreite des Hauptmaximums der effektiven Punktbildfunktion im Objekt. Da der Informationsgehalt der erfindungsgemäß durchgeführten Distanzbestimmungen einer bei erhöhter Auflösung gewonnenen Distanzmessung entspricht, kann abkürzend auch von Auflösungsäquivalent gesprochen werden. Die Messungen von solch geringen Distanzen in biologischen Mikroobjekten ist von großer Bedeutung z.B. für wissenschaftliche Fragestellungen in Biologie und Medizin, aber auch für bestimmte Aspekte der klinischen Forschung und der Diagnostik an Präparaten.

Die multispektrale Kalibrierung erlaubt es, in situ Messungen über das Abbildungsverhalten des Systems am konkreten biologischen Objekt durchzuführen. Bei Verwendung der Fluoreszenzlebensdauer als alleinigem Parametertyp und/oder bei Anregung der Fluorochrome mit derselben bzw. denselben Photonenenergie(n) entfällt aufgrund der Kalibrierung die in situ Korrektur des chromatischen Versatzes in der Objektebene. Für höchstauflösende Fernfeld-Mikroskoptypen wie z.B. das Wellenfeldmikroskop und bei Verwendung erfindungsgemäßer Fluoreszenzmarker ermöglicht die Erfindung dreidimensionale geometrische Distanzmessungen in biologischen Objekten bis hinunter zu molekularer Präzision (d. h. Auflosungsäquivalent besser 10 nm).

Im Gegensatz zur Elektronenmikroskopie bzw.

zur optischen und nicht-optischen Nahfeldmikroskopie bleibt die dreidimensionale Struktur des zu untersuchenden Objektes intakt, da auf mechanische Schnitte verzichtet wird. Damit können in dreidimensional konservierten Mikroobjekten 3D-Distanzmessungen mit einem Bereich kleiner als die Halbwertsbreite des Hauptmaximums der effektiven Punktbildfunktion vorgenommen werden Insbesondere eröffnet das Verfahren die Möglichkeit, dreidimensionale Distanzmessungen auch unter vitalen Bedingungen des biologischen Objektes durchzuführen. Im Vergleich zu den im Stand der Technik bekannten Verfahren des Point Spread Function Engineering besteht ein wesentlicher Vorteil der vorliegenden Erfindung darin, daß auch bereits vorhandene Systeme der quantitativen Fluoreszenzmikroskopie als Basis für die erfindungsgemäße Steigerung des Auflösungsäquivalents verwendet werden können.

Für die Detektion der Fluoreszenzemission eignen sich sowohl ein- und zweidimensionale rasternde als auch nicht-rasternde elektronische bzw. optoelektronische Detektorsysteme.

Ein Einsatz des erfindungsgemäßen Verfahrens bietet sich insbesondere an für multispektrale Präzisionsdistanzmessung in biologischen Mikroobjekten zur absoluten und relativen Lokalisation und Distanzmessung von fluoreszenten Meßstrukturen beliebiger spektraler Signatur.

**Vorteilhafte Ausführungsformen und Weiterbildungen der Erfindung :**

Um bei Verwendung von statischen Mikroskopsystemen eine möglichst scharfe Punktbildfunktion zu erhalten, sollte das biologische Objekt für die mikroskopischen Untersuchung axialtomographisch gedreht werden können (Mikroaxialtomographie). Auf diese Weise können Anisotropien in der 3D-Punktbildfünktion so überwunden werden, daß zwei Objektpunkte jeweils in einer Ebene mit der relativ besten Punktbildfunktion liegen. Das biologische Objekt ist vorzugsweise in oder an einem drehbaren Träger mit kreisförmigem, rechteckigem oder vieleckigem Querschnitt fixiert oder in anderer Weise befestigt.

Der Träger besteht aus einem für die verwendeten Lichtwellenlängen transparenten Material, dessen Brechungsindex sich um höchstens 12 % von dem des umgebenden Mediums unterscheidet. Er kann hohl oder massiv sein und und sein Querschnittsdurchmesser sollte kleiner oder gleich 300 µm betragen.

In einer bevorzugten Ausführungsform des erfindungsgemäßen Verfahrens wird der (im Querschnitt dreieckige, viereckige oder vieleckige) Träger für axialtomographische Untersuchungen um die Winkel $\phi_m$ = 360/3 [°], $\phi_m$ = 360/4 [°], oder $\phi_m$ = 360/n [°] gedreht, wobei n die Zahl der planaren Seiten des Trägers ist. Eine Abstandsmessung zwischen den Kalibriertargets und/oder Meßstrukturen wird bei einem, mehreren, oder jedem dieser Winkel, jeweils für eine zwei oder mehrere spektrale Signaturen vorgenommen.

Zur Ermittlung von Ist- und Sollwerten, zu deren Vergleich und zur Bestimmung des Korrekturwerts/Kalibrierwerts werden vorzugsweise die folgenden Verfahrensschritte durchgeführt:

- ein oder mehrere Kalibriertargets B mit einem Abstand größer als die Halbwertsbreite des Hauptmaximum der effektiven Punktbildfunktion vom Schwerpunkt der N Meßstrukturen wird/werden mit einer beliebigen spektralen Signatur markiert,

- die Abstände $d_{ik}$ (i, k = 1 ... N, i ≠ k ) der Schwerpunkte der spektral getrennten Beugungsfiguren der N Meßstrukturen und die Abstände $d_{iB}$ der N Meßstrukturen zum Kalibriertarget B werden gemessen, wobei automatisierte Verfahren der Bildanalyse angewendet werden,

- für eine Meßstruktur werden die Strecken $d_{ik}$ und $d_{iB}$ jeweils in der Ebene der schmalsten Punktbildfunktion sowie alle übrigen Distanzen gemessen werden, wozu das Objekt axialtomographisch jeweils um einen definierten Winkel $\phi_m$ gedreht wird,

- optische Aberrationen aus den Kalibrierungsmessungen werden korrigiert, und an die korrigierten gemessenen Abstände $d_{ik} (\phi_m)$ und $d_{iB} (\phi_m)$ wird jeweils eine Cosinusfunktion $A_{ik} \cos (\phi_m + \theta_{ik})$ bzw. $A_{iB} \cos (\phi_m + \theta_{iB})$ mit geeigneter Phasenverschiebung angepaßt,

- die Maxima $A_{ik}$ und $A_{iB}$ der Anpassungsfunktion von $d_{ik}$ bzw. $d_{iB}$ werden durch den Vergrößerungsfaktor dividiert und als euklidischer Abstand $D_{ik}$ bzw. $D_{iB}$ der N Meßstrukturen untereinander bzw. der Abstände der Meßstrukturen zum kalibviertarget B bestimmt.

  Für die Bestimmung der Maxima werden vorzugsweise zusätzlich die diesen entsprechenden Minima des Abstandes $z_{ik}$, $z_{iB}$ in der zu der Ebene der $d_{ik}$, $d_{iB}$ orthogonalen Ebene herangezogen und analog ausgewertet.

Die Ermittlung aller Koordinaten der N Meßstrukturen und ihrer Relativkoordinaten zum Bezugspunkt B, d.h. die Ermittlung der Positionen $x_i$, $y_i$, $z_i$ und $x_k$, $y_k$, $z_k$ bzw. der Abstände $x_k - x_i$ , $y_k - y_i$ , $z_k - z_i$ und $x_B - x_i$ , $y_B - y_i$ , $z_B - z_i$ , erfolgt erfindungsgemäß auf der Grundlage der mikroskopisch gemessenen 3D-Abstände $D_{ik}$ bzw. $D_{iB}$ , vorzugsweise unter Verwednung des folgenden Gleichungssystems

$$D^2_{ik} = (x_k - x_i)^2 + (y_k - y_i)^2 + (z_k - z_i)^2$$

$$D^2_{iB} = (x_B - x_i)^2 + (y_B - y_i)^2 + (z_B - z_i)^2$$

$$D^2_{kB} = (x_B - x_k)^2 + (y_B - y_k)^2 + (z_B - z_k)^2$$

Zur Absicherung der ermittelten Meßergebnisse sollte die vorstehend beschriebene Vorgehensweise für mehrere Kalibriertargets B und die gleichen N Meßstrukturen durchgeführt werden. Die Koordinaten und Abstände der N Meßstrukturen können anhand der Schwerpunkte ermittelt werden, die sich aus Schwerpunktmittelungen der Messungen zu allen Bezugspunkten ergeben.

Insbesondere für graphische Darstellungen werden die ermittelten Positionen $x_i$, $y_i$, $z_i$ und $x_B$, $y_B$, $z_B$ vorzugsweise mit einer Punktbildfunktion gefaltet, die eine Halbwertsbreite mit dem jeweils erreichten Auflösungsäquivalent besitzt.

Zur Fluorochrommarkierung von Meßstrukturen und Kalibriertargets werden vorzugsweise solche Fluorochrome verwendet, die im ultravioletten, sichtbaren und/oder infraroten Lichtwellenlängenbereich angeregt werden können und die im ultravioletten, sichtbaren und/oder infraroten Lichtwellenlängenbereich emittieren.

Bei einer vorteilhaften Ausführungsform der Erfindung werden markierte Regionen des biologischen Objekts mit bekannter Distanz voneinander als Kalibriertargets verwendet. Diese Markierung kann beispielsweise mit geeigneten biochemischen Sonden durchgeführt werden. Die Verwendung biologischer Kalibriertargets hat gegenüber der Verwendung synthetischer Kalibriertargets, beispielsweise Kalibrierkügelchen, den praktischen Vorteil, daß bei der Kalibrierung neben den optischen Randbedingungen des Objektes zusätzlich präparativ bedingte Randeffekte in die Kalibrierung einfließen, wie z.B. das Verhältnis aus tatsächlichen Fluoreszenzsignal zu unspezifischem Hintergrund (das durch automatische Bildanalysealgorithmen bestimmt wird).

Als nicht-biologische bzw. synthetische Kalibriertargets eignen sich ganz besonders Mikrokügelchen, die die gleiche oder eine höhere multispektrale Signatur als die zu ortenden Meßstrukturen aufweisen. Sie werden wie die biologischen Objekte behandelt. Solche Kalibriertargets sind vorzugsweise auf Objekthaltern in definierter Raumanordnung fixiert. Die Fixierung kann bereits bei der Fabrikation der betreffenden Objektträger geschehen , was insbesondere für die Routinebenutzung von Vorteil ist.

Zur Durchführung der erfindungsgemäßen Distanzmessung unter Verwendung eines Mikroskops mit Axialtomograph werden die biologischen Objekte mit den Meßstrukturen und den/die Kalibriertargets in oder auf einer Mikrokapillare oder Glasfaser als Objekthalter bzw Objektträger präpariert. Die Kapillare/Faser hat einen exakt definierten Durchmesser, wobei verschiedene Durchmesser möglich sind. Zur Festlegung dieser Kapillare/Faser auf dem Mikroskoptisch wird erfindungsgemäß eine spezielle Halterung vorgeschlagen, die aus einem starren, vorzugsweise dorsiventral abgeplatteten Rahmen besteht, an bzw. auf dem wenigstens eine Lagerbuchse montiert ist, in der eine Mikrokapillare oder Glasfaser um ihre Längsachse rotierfähig und mit der Rotationsachse senkrecht zur optischen Achse des Mikroskops gelagert werden kann. Die Lagerbuchse(n) sollten (sind) so angeordnet sein, daß die Rotationsachse der Kapillare/Faser senkrecht zur optischen Achse des Mikroskops verläuft Die Drehung der Untersuchungsobjekte in oder an der Kapillare/Faser erfolgt durch Drehung der Kapillare/Faser direkt, vorzugsweise vermittels eines Drehmotors. Das hat den Vorteil, daß die einmal eingestellte und justierte Optik des Mikroskops unverändert beibehalten werden kann. Zur Unterstützung bzw. Stabilisierung der zu drehenden Kapillare/Faser gegen Durchhängen oder Verschieben im Bereich der Ausnehmung des Rahmens ist ein austauschbarer Einsatz für den Rahmen vorgesehen. Dieser Einsatz kann insbesondere aus Plastik oder Glas gefertigt sein und eine grabenförmige Vertiefung in Langsrichtung der Kapillare/Faser aufweisen. Zur leichteren Handhabung, vor allem beim Einsetzen in den Rahmen, kann dieser Einsatz einen oder mehrere Klemmschlitz(e) aufweisen. Der erfindungsgemäße Rahmen hat vorzugsweise ähnliche Außenmaße wie ein herkommliches Objektträgerplättchen, d.h. seine Länge beträgt weniger als 77 mm und seine Breite weniger als 27 mm, und er ist sehr leicht, d.h. er wiegt beispielsweise nur ca. 15 Gramm Mit einem Computergesteuerten Schrittmotor kann die Kapillare/Faser um einen exakt definierten Winkel um ihre Achse gedreht werden. Da diese Drehkraft direkt an der Kapillare/Faser ansetzt und nicht an ihrer Halterung, ist die Gefahr, daß die Kapillare/Faser verschoben wird und aus dem Blickfeld des Mikroskops gerät oder daß gar der ganze Mikroskoptisch verrückt bzw. verschoben wird, wesentlich verringert.

Fur die Durchführung des erfindungsgemäßen Distanzmessungsverfahrens unter Verwendung eines Laser-Scan- Flußfluorometers, das einen frei oder in einer Küvette stromenden Flüssigkeitsstrahl umfaßt, und mit einer oder mehren Laserstrahlquelle(n), deren Laserstrahl(en) auf die zentrale Trajektorie des Flüssigkeitsstrahls fokussiert sind, sollte die Laseroptik derart ausgewählt und angeordnet sein, daß der bzw. die Laserstrahlen bandförmig auf die Objekttrajektorie (die die Objekte führende zentrale Trajektorie des Flüssigkeitsstrahls) fokussiert ist bzw. sind. Die Bandform des bzw. der Laserstrahlen kann hierfür vorteilhaft einfach durch Interferenzstreifen zweier oder mehrerer sich kreuzender Teilstrahlen erzeugt werden Die Linsen und Blenden im Detektionsstrahlengang sind vorzugsweise derart ausgewählt und angeordnet, daß allein die Fluoreszenzemission aus dem zentralen Interferenzstreifen auf den Detektor abgebildet wird. Außerdem sollte der Detektor in einzelne Detektionspixel aufgeteilt, um eine räumliche Auflösung der Fluoreszenzemission sowohl in Flußrichtung als auch senkrecht zur Flußrichtung zu ermöglichen. Das hat den Vorteil, daß eine Lokalisation der fluoreszierenden Meßstrukturen und/oder Kalibriertargets nicht nur in Flußrichtung aufgrund der Bewegung des Objektes mit konstanter Geschwindigkeit sondern auch senkrecht dazu erfolgen kann.

Bei einem Flüssigkeitsstrahl in z-Richtung und einer Laseroptik aus Laserstrahl(en) in x-Richtung und Blende(n) und Detektor(en) in y-Richtung ermöglicht das Verfahren eine Verbesserung der Auflösung in zwei Dimensionen. Wird zusätzlich eine entsprechende Laseroptik mit Laserstrahl(en) in y-Richtung und Blende(n) und Detektor(en) in x-Richtung angeordnet, erhält man eine Auflösungsverbesserung in drei Dimensionen. In beiden Fällen ist die Erstellung von Punktbildfunktionen möglich, die von der Orientierung des Objekts nahezu unabhängig sind.

**Ausführungsbeispiele zur näheren Erläuterung der Erfindung :**

**BEISPIEL 1: Distanzmessung zwischen Genabschnitten von Chromosomen in einem Zellkern (unabhängig vom Mikroskoptyp)**

In einem Zellkern nimmt das Chromatin der einzelnen Chromsomen definierte Teilregionen ein. Innerhalb einer oder mehrerer solcher chromosomalen Teilregionen werden die zu ortenden Strukturen , d.h. die Meßstrukturen, z.B. kleine Chromosomenabschnitte wie Gene oder Teilstücke von Genen, mit einer im Stand der Technik bekannten Methode der Fluoreszenz in situ Hybridisierung spezifisch markiert, und zwar mit Fluorochromen verschiedener bestimmter spektraler Signaturen $M_1$, $M_2$, $M_3$, .... Die Abstände zwischen den Markierungsorten (den markierten Meßstrukturen) liegen unter der klassischen Auflösung, d.h. sie sind kleiner als die Halbwertsbreite des Hauptmaximum der effektiven Punktbildfinktion. Die Markierung der (Objekt-)Strukturen (Meßstrukturen) erfolgt derart, daß die spektralen Signaturen an den zu ortenden Strukturen (Meßstrukturen) mit nahezu der gleichen Dynamik vertreten sind. Das biologische Objekt wird auf einer Glasfaser exakt definierten Durchmessers oder in einer runden oder rechteckigen Kapillare definierter Dimensionen präpariert

Um die Distanzen zu bestimmen, werden mikroskopierbare Präparate mit Kalibriertargets hergestellt, und zwar unter den gleichen physikalischen und chemischen Versuchsbedingungen wie das Objekt bzw. die zu ortenden Objektstrukturen (= Meßstrukturen).

AJs Kalibriertargets bzw als Präparate mit Kalibriertargets dienen beispielsweise:

a) mikroinjizierbare Kügelchen einer spektralen Signatur (monochromatisch):

Die Kügelchen sind nach bekannten Verfahren mit jeweils einem Fluorochrom, d.h. monochromatisch markiert und aufgrund ihrer Größe von den auszumessenden (zu ortenden) Strukturen im Objekt (den Meßstrukturen) unterscheidbar. Man injiziert solche Kalibrierkügelchen, die die im Objekt vorhandenen spektralen Signaturen der Meßstrukturen repräsentieren, ansonsten aber vorzugsweise identisch sind (hinsichtlich Größe, Geometrie, Materialbeschaffenheit etc.). Mit anderen Worten: Die spektralen Signaturen der Meßstrukturen sowie der Kalibriertargets werden so gewählt, daß unter den gegebenen Untersuchungsbedingungen die von ihnen emittierten Fluoreszenzemissionen getrennt voneinander analysiert werden können. Die Injizierung und Fixierung der monochromatischen Kalibrierkügelchen erfolgt derart, daß sich die einzelnen Kügelchen verschiedener spektraler Signatur in Clustern direkt an der Glasfaser-Oberfläche oder Kapillarwand anordnen, vorzugsweise in einer Querschnittsebene der Faser bzw. Kapillare. Bei Verwendung von Präzisionsfasern und/oder -kapillaren liegen die Kügelchen folglich in definierten Abstände voneinander bzw. von einer Bezugsebene, Bezugsachse oder Bezugslinie.

b) mikroinjizierbare Testkügelchen multispektraler Signatur (polychromatisch) und gleicher spektraler Dynamik:

Die Kügelchen sind nach bekannten Verfahren mit jeweils allen bei den markierten (Objekt-)Strukturen (Meßstrukturen) vorkommenden spektralen Signaturen markiert Infolgedessen können sie an beliebige Stellen im zu vermessenden biologischen Objekt (hier Kern) injiziert werden. Eine Sollgeometrie wie bei a) ist nicht erforderlich, da für jede Signatur die chromatischen Schwerpunkte an derselben Stelle lokalisiert sein sollen Zur Unterscheidung von den markierten (Objekt-)Strukturen (Meßstrukturen) können die Kügelchen entweder einer anderen Größenklasse angehören oder aber eine zusätzliche spektrale Signatur tragen, die bei den zu messenden Strukturen d h. den Meßstrukturen (gemäß Präparationsprotokoll) nicht vorkommt.

c) simultan markierte Chromosomenregionen bekannter Distanz an einem anderen Chromosom als demjenigen, das die zu ortenden Strukturen (Meßstrukturen) trägt:

Die Kalibriertargets, d.h. hier die Chromosomenregionen mit bekanntem Abstand voneinander, sind mit Hilfe einer Probenkombination von DNA-Sequenzen, die die verschiedenen spektralen Signaturen trägt, unterschiedlich markiert. Eine Unterscheidung der chromosomalen Kalibriertargets von den zu ortenden (Chromosomen-) Strukturen (Meßstrukturen) kann beispielsweise durch unterschiedliche Fluoreszenzintensität erfolgen oder durch ein unterschiedliches Intensitätsverhältnis zwischen Fluorochromen verschiedener spektraler Signatur oder durch Verwendung eines zusätzlichen Fluorochroms mit abweichender spektraler Signatur, das bei der Fluoreszenzmarkierung der Meßtargets nicht verwendet wurde.

Es ist auch möglich, daß die Kalibriertargets einer anderen Größenklasse angehören als die zur ortenden Meßstrukturen.

Die erfindungsgemäßen Distanzmessungen werden mittels bekannter Fernfeld-Mikroskopieanlagen, bestehend aus Mikroskop, Photomultiplier und/oder Kamera und Datenverarbeitungsanlage durchgeführt. Dabei werden zum einen die Abstände zwischen den Kalibriertargets mit Fluorochrommarkierungen verschiedener spektraler Signatur gemessen. Die gemessenen Lokalisationen ( d.h. die gemessenen Targetabstände) werden mit den aufgrund der Geometrie berechneten Soll-Lokalisationen ( d.h. den tatsächlichen Targetabständen) verglichen und daraus der spektral bedingte Versatz (Shift) bestimmt. Dieser Versatz (Shift) ist der Kalibrierwert für die gemessenen Distanzwerte zwischen den zu ortenden (Objekt-)Strukturen (Meßstrukturen).

Da dieser Versatz von den optischen Eigenschaften des Präparates abhängt (z.B. Brechzahlen in den Kernen und dem Präparationsmedium), sollte die Kalibrierung in situ erfolgen. Das heißt im vorliegenden Beispiel, daß sich die Kalibriertargets neben den zu untersuchenden und markierten (chromosomalen) Strukturen (Meßstrukturen) im Kern befinden sollten Es werden die Abstände zwischen den zu ortenden (Objekt-) Strukturen (Meßstrukturen) bzw. die Abstände zwischen den verschiedenen Farbsignalen bzw. Farbpunkten der betreffenden Meßstrukturen, z.B. zwischen dem rotfluoreszierenden und dem grünfluoreszierenden Farbpunkt (von Intensitätsmaximum zu Intensitatsmaximum oder von Schwerpunkt/Baryzentrum zu Schwerpunkt/Baryzentrum) gemessen, und dieser Meßwert wird um den mit den Kalibriertargets ermittelten (durch die verschiedene spektrale Signatur bedingten) Versatz in hochpräziser Weise korrigiert.

Bei Kalibriertargets in Gestalt von mikroinjizierbaren Testkügelchen mit multispektraler Signatur (polychromatisch) wird der chromatische Versatz aus dem Lokalisationsunterschied der Schwerpunkte für jede Signatur bestimmt. Die dafür erforderliche Identifizierung der zu einem Kalibriertarget gehörenden Fluoreszenzemission kann beispielsweise durch volumenerhaltende Schwellwertverfahren oder durch Mittelung der Segmentierungsergebnisse bei Schwellwertvariation erfolgen.

Bei Kalibriertargets in Gestalt von fluorochrommarkierten Objektregionen mit multispektraler Signatur (polychromatisch) wird der chromatische Versatz genauso bestimmt

Als fluorochrommarkierte Kalibrierregionen eignen sich insbesondere auch Zentromerregionen, die mit einer Probenkombination von solchen DNA-Sequenzen hybridisiert werden, die alle an dieselben chromosomalen DNA-Abschnitte binden, jedoch mit Fluorochromen unterschiedlichen spektraler Signatur markiert wird. Erfolgt die Hybridisierung unter noch stringenten Bedingungen, liegen pro Zellkern zwei Markierungsregionen vor; bei nieder-stringenten Bedingungen werden aufgrund zusätzlicher Nebenbindungsregionen zusätzliche Zentromerregionen markiert, so daß die Zahl der Kalibrierungsregionen ansteigt. Das ist u.U. sehr von Vorteil.

### BEISPIEL 2: Distanzmessung zwischen Genabschnitten von Chromosomen in einem Zellkern unter Verwendung eines Epifluoreszenzmikroskops mit Axialtomograph

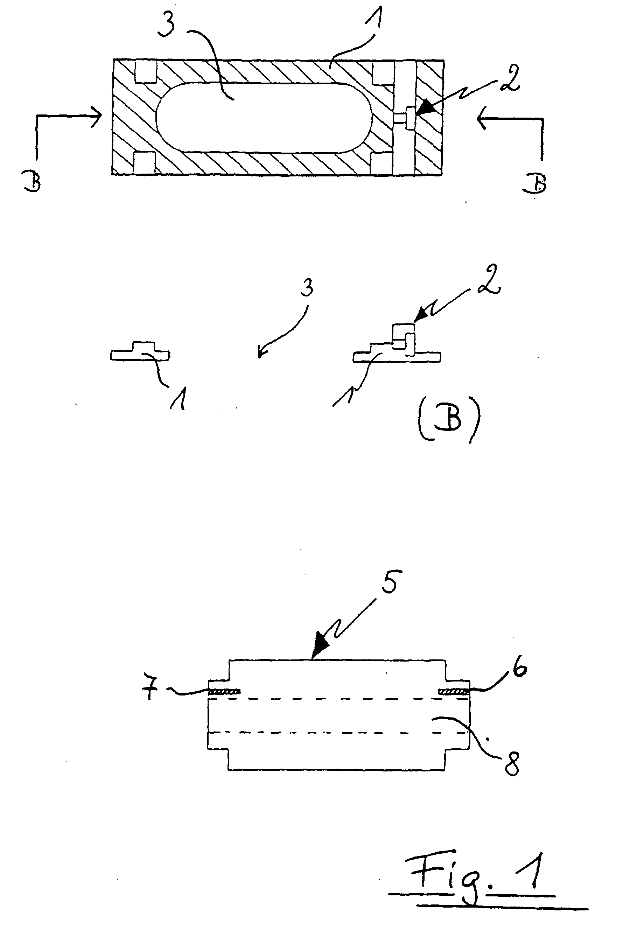

Zur Durchführung des erfindungsgemäßen Verfahrens wird ein im Prinzipaufbau bekanntes Epifluoreszenzmikroskop mit Axialtomograph wie folgt modifiziert: Auf den Mikroskoptisch wird anstelle eines Objektträgerplättchens eine erfindungsgemäße Halterung gemäß Fig. 1 für Mikrokapillaren oder Glasfasern, gesetzt. Diese Halterung besteht aus einem starren vorzugsweise dorsiventral abgeplatteten Rahmen 1, auf dem eine Lagerbuchse 2 montiert ist, in der eine Mikrokapillare oder Glasfaser um ihre Längsachse rotierfähig und mit der Rotationsachse senkrecht zur optischen Achse des Mikroskops gelagert ist. Die Drehung des Untersuchungsobjektes in oder an der Kapillare/Faser erfolgt durch Drehung der Kapillare/Faser direkt, und zwar entweder manuell oder mittels eines Drehmotors. Das hat den Vorteil, daß die einmal eingestellte und justierte Optik des Mikroskops unverändert beibehalten werden kann. Zur Unterstützung bzw. Stabilisierung der zu drehenden Kapillare/Faser gegen Durchhängen und Verschieben im Bereich der Ausnehmung 3 des Rahmens 1 ist ein flächiger, scheibenförmiger Einsatz 5 austauschbar in dem Rahmen 1 angeordnet. Dieser Einsatz 5 besteht aus Plastik und weist eine grabenförmige Vertiefung 8 auf, die sich unterhalb und in Längsrichtung der Kapillare/Faser erstreckt. In seinem Randbereich ist der Einsatz 5 mit zwei schlitzförmigen Ausnehmungen 6, 7 versehen, die sich jeweils senkrecht zur Randkante erstrecken und das Einsetzen des Einsatzes 5 in den Rahmen 1 erleichtern. Mit einem Computergesteuerten Schrittmotor wird die Kapillare/Faser in der Lagerbuchse um einen definierten Winkel um ihre Achse gedreht. Die Drehkraft setzt direkt an der Kapillare/Faser an (und nicht an ihrer Halterung), wodurch die Gefahr, daß die Kapillare/Faser beim Drehen verschoben wird und aus dem Blickfeld des Mikroskops gerät oder daß gar der ganze Mikroskoptisch verrückt bzw. verschoben wird, nahezu vollständig vermieden ist.

Das biologische Mikroobjekt, z.B. ein Zellkern, in dem die zu ortenden Meßstrukturen bereits mit Fluorochromen markiert sind und das auch bereits Kalibriertargets enthält (zur Präparation siehe Beispiel 1), befindet sich auf der Glasfaser oder in der Mikrokapillare Der Abstand von zwei oder mehr Meßstrukturen bzw. Kalibriertargets voneinander ist kleiner als die Halbwertsbreite des Hauptmaximums der axialen effektiven Punktbildfunktion. Mit dem Axialtomograph wird das Objekt gedreht unter ggf automatischer Refokussierung. Die Drehung erfolgt in der Art, daß jeweils ein Abstand zwischen zwei Meßstrukturen bzw. Kalibriertargets (d.h. zwischen deren Fluoreszenzintensitätsschwerpunkten) maximal wird. Der maximale gemessene Abstand entspricht dem tatsächlichen Abstand.

Ist man nur an den Abständen zwischen den Meßstrukturen bzw. Kalibriertargets, d.h nicht an ihrer absoluten räumlichen Anordnung interessiert, kann man nun von einer der bekannten Meßstrukturen bzw. Kalibriertargets aus fortfahren, den Abstand zu einer dritten Meßstruktur bzw. einem dritten Kalibriertarget zu maximieren und zu bestimmen. Sind die Abstände zwischen den Meßstrukturen bzw. Kalibriertargets größer als die Halbwertsbreite des Hauptmaximums der lateralen (senkrecht zur optischen Achse) Punktbildfunktion, so genügt eine einzige spektrale Signatur; sind die Abstände dagegen kleiner, müssen die Meßstrukturen bzw. Kalibriertargets durch multispektrale Signatur unterschieden werden. Die Schwerpunkte (Maxima) der Signale dienen der Lokalisierung. Sofern die untersuchten Meßstrukturen einen Durchmesser haben, der kleiner als die Halbwertsbreite des Hauptmaximums der effektiven lateralen Punktbildfünktion ist, werden alle Beugungsbilder der Meßstrukturen bzw Kalibriertargets durch eine scharfe Punktbildfunktion bestimmt, so daß die Maxima optimal bestimmt werden können. Sind zwischen den Meßstrukturen bzw. Kalibriertargets auch Distanzen größer als die Halbwertsbreite des Hauptmaximums der lateralen Punktbildfunktion zugelassen, so ist die Bestimmung aller Abstände zwischen den Meßstrukturen bzw. Kalibriertargets für $N \geq 2$ innerhalb eines Kerns bei einmaligem Drehen nur dann möglich, wenn bei jedem Drehwinkel optische Schnittserien registriert werden (siehe Beispiel 3 zur konfokalen Laser-Scanning Mikroskopie). Ist man an der absoluten Anordnung der Meßstrukturen bzw. Kalibriertargets im Raum interessiert, so müssen die jeweiligen Schwerpunkte (baryzentren) präzise bestimmt werden. Durch mehrmaliges Wiederholen der gesamten Meßprozedur und statistische Auswertung kann die absolute Lokalisierung der Meßstrukturen bzw. Kalibriertargets, d h. die Winkelmessung, verbessert werden

**BEISPIEL 3: Distanzmessung zwischen Genabschnitten von Chromosomen in einem Zellkern unter Verwendung eines Konfokalen Laser-Scanning Mikroskops**

Von dem biologische Mikroobjekt, z.B. einem Zellkern, in dem die zu ortenden Meßstrukturen bereits mit Fluorochromen markiert ist, und das auch bereits Kalibriertargets enthält (zur Präparation siehe Beispiel 1), wird eine Serie optischer Schnitte aufgenommen Die Meßstrukturen besitzen $l = 1,2,..,L$ spektrale Signaturen. Die spektrale Signatur der Kalibriertargets unterscheiden sich von derjenigen der Meßstrukturen z.B. in Volumen, Durchmesser, Intensität oder in der Zahl der spektralen Signaturen ($l = 1,2,..,L +1$). Die Bilder der optischen Schnitte werden für jede spektrale Signatur getrennt aufgenommen und gegebenenfalls noch der Untergrund korrigiert.

Zur Auswertung werden zum einen die Kalibriertargets identifiziert und der chromatische Versatz bestimmt. Dazu werden die Kalibriertargets unter jeder spektralen Signatur lokalisiert. Bei polychromatischen Kalibriertargets ergibt sich der spektrale Versatz aus der Differenz der Lokalisationen.

Zum anderen werden parallel zur oder im Anschluß an diese Kalibrierung die Meßstrukturen lokalisiert. Man bestimmt dabei in jeder spektralen Signatur zunächst unabhängig voneinander die Position der Schwerpunkte der gemessenen Intensitätssignale Anschließend werden die Lokalisationen um den aus den Kalibrierungsmessungen bekannten spektralen Versatz korrigiert.

Die korrigierten Positionen der Meßstrukturen werden in Bezug auf einen Vergleichspunkt angegeben. Dieser Vergleichspunkt kann z.B. ein beliebig ausgezeichneter fester Punkt im Objekt oder der Schwerpunkt eines Kalibriertargets (z.B. eine markierte Chromosomenregionen) oder eines sonstwie ausgezeichneten Chromosomenterritoriums sein. Es kann aber auch die Schwerpunktskoordinate aller Meßstrukturen innerhalb eines Chromosomenterritoriums sein.

Die beschriebenen Meßverfahren für die konfokale Laser Scanning Mikroskopie können auch im Zusammenhang mit Axialtomographie durchgeführt werden. Dabei wird, wie in Beispiel 2 beschrieben, das biologische Mikroobjekt um einen definierten Winkel gedreht und pro Winkel ein kompletter 3D-Bildstapel aufgenommen Die Drehwinkelgröße wird so bestimmt, daß jeweils ein Abstand zwischen zwei Meßstrukturen maximal wird. Für jeden 3D Bildstapel wird dann, wie in Beispiel 2 beschrieben, verfahren. Der Vorteil der Drehung liegt darin, daß man einen Abstand auf die Lokalisierung zweier Punkte bezieht, die in der Lateralebene bestimmt wird und damit auf der Basis der schärfsten(steilsten) Punktbildfunktion

Anstatt wie vorstehend beschrieben die Kalibrierung und die Distanzmessung zwischen den zu ortenden Strukturen, d.h. Meßstrukturen, in demselben biologischen Objekt durchzuführen, kann man auch die Kalibrierung unabhängig von den Meßstrukturen an gleichartigen biologischen Objekten durchführen. Bei dieser Verfahrensvariante ist die Unterscheidung zwischen den Fluoreszenzsignalen der Kalibriertargets und denjenigen der Meßstrukturen erleichtert. Anhand der mit den Kalibriertargets ermittelten Werte des optischen Versatzes kann man Eichkurven für die Distanzmessungen zwischen den Meßstrukturen erstellen. Derartige Eichkurven machen z.B. Angaben über den spektralen Versatz als Funktion von Brechungsindex und Absorption des verwendeten Immersionsmediums, der verwendeten Optik, Filter und Detektionseinheiten, der verwendeten Auswertealgorithmen, der verwendeten biologischen Objekte, der axialen und lateralen Lokalisation der Meßstrukturen bzw. Kalibriertargets in ihnen etc. Die Verwendung der Information aus diesen speziellen Eichkurven zur erfindungsgemäßen Distanzmessung bietet sich insbesondere in solchgen Fällen an , bei denen einer größere Prazisionstoleranz verwendet erlaubt ist.

**BEISPIEL 4: Distanzmessung zwischen Genabschnitten von Chromosomen in einem Zellkern unter Verwendung eines Wellenfeldmikroskops**

Die Durchführung des erfindungsgemäßen Verfahrens zur Distanzmessung unter Einsatz der Wellenfeldmikroskopie ist praktisch identisch mit dem in Beispiel 3 beschriebenen Vorgehen Im Unterschied zum konfokalen Laser-Scanning Mikroskop ist hier die Lokalisierung in axialer Richtung wesentlich genauer als in lateraler, da hier die scharfste (steilste) Punktbildfunktion vorliegt. Durch Kombination mit Axialtomographie kann die Genauigkeit der Positionsbestimmung und Distanzmessung noch gesteigert werden

**BEISPIEL 5: Distanzmessung zwischen Genabschnitten von Metaphasechromosomen in einem Zellkern unter Verwendung eines Laser-Scanning Flußfluorometers**

Ein Laser-Scanning Flußfluorometer nutzt als Basisgerät ein Durchflußzytometer, wie es heute routinemäßig beispielsweise für Zellanalysen und -sortierung in der Immunologie oder Hämatologie eingesetzt wird. Dabei werden die biologischen Objekte in einem Flüssigkeitssystem so angeordnet, daß sie im Bereich der zentralen Trajektorie eines Flüssigkeitsstrahls, der frei oder in einer Küvette strömt, einzeln nacheinander durch einen oder mehrere Laserfoci geführt werden Die biologischen Objekte, im vorliegenden Beispiel die Metaphasechrömosomen, sind spezifisch mit einem oder mehreren Fluoreszenzmarkern markiert und werden durch die Laserstrahlen selektiv zur Fluoreszenz angeregt. Diese wird üblicherweise in mehreren optischen Detektionskanälen, die durch spektrale Filter separiert sind, registriert und integral von Photomultipliern in ein entsprechendes verstärktes elektrisches Signal umgesetzt.

Um ortsaufgelöst in einer Richtung die Fluoreszenzverteilung messen zu können, wurden sog. Slit-Scan Verfahren etabliert. Das biologische Mikroobjekt, hier Metaphasechromosomen, d.h. längliche Objekte von typischerweise 5 bis 15 µm, wird von Flüssigkeitsstrahl mit konstanter Geschwindigkeit durch einen oder mehrere Laserstrahlen geführt, die in Strömungsrichtung so stark fokussiert sind, daß die Fluoreszenzverteilung zeitabhängig entlang des Objektes gemessen wird. Aufgrund der bekannten Flußgeschwindigkeit kann das pro Dektektionskanal aufgenommene, eindimensionale, zeitabhängige Fluoreszenzprofil in eine Ortsinformation transformiert werden Die Flußgeschwindigkeiten betragen typischerweise bis zu 10 m/s, und es können bis zu einigen tausend Objekten pro Sekunde analysiert werden

Alle bisher in der Literatur beschriebenen Slit-Scan Systeme haben in Flußrichtung eine typische Fokusbreite (gemessen aus der effektiven Punktbildfunktion) von minimal etwa 2 µm (= Auflosungsaquivalent), da aus prinzipiellen Gründen bei stärkerer Laserfokussierung die Fokustiefe stark abnimmt und somit eine gleichmäßige Auflösung im Bereich möglicher Partikeltrajektorien (typischerweise 10 µm um die zentrale Achse des Flüssigkeitsstrahls) nicht mehr gewährleistet ist. Hinzu kommt, daß bei den im Stand der Technik beschriebenen Verfahren nur ein eindimensionaler Scan möglich ist

Zur Durchführung des erfindungsgemäßen Verfahrens zur Distanzmessung im Nanometerbereich wird ein im Prinzipaufbau bekanntes Laser-Scanning Flußfluorometer durch die folgend Anordnung (hier exemplarisch für einen Laser und einen Detektionskanal dargestellt) modifiziert:

Zwei kohärente Teilstrahlen des Lasers mit gleicher Intensitat und ebenen Wellenfronten werden unter einem kleinen Winkel zueinander in den Flüssigkeitsstrahl fokussiert und im Fokalbereich zur Interferenz gebracht. Es entsteht ein Muster aus konstruktiver und destruktiver Interferenz, wobei die Interferenzstreifen senkrecht zur Strömungsrichtung verlaufen Die Halbwertsbreite der Interferenzstreifen hängt nicht mehr von der Breite des Laserfokus, sondern nur noch von der Wellenlänge und dem Winkel der Laserteilstrahlen zueinander ab. Bei einem Winkel von 28° zwischen den beiden Teilstrahlen kann man für 500 nm Laserwellenlänge die Halbwertsbreite des Hauptinterferenzstreifens zu etwa 500 nm abschatzen.

Die Interferenzstreifen können mit der notwendigen Tiefe erzeugt werden, so daß alle möglichen Objekttrajektorien des Flüssigkeitsstrahl mit gleicher Streifenbreite ausgeleuchtet werden.

Da mehrere Interferenzstreifen gleichzeitig erzeugt werden, ist die Objektinformation vieldeutig. Die bekannte Maßnahme der Rückfaltung der gemessenen Intensitätsverteilung mit dem Streifenmuster d.h. mit der Punktbildfunktion bringt hier keinen oder nur geringen Auflösungsgewinn gegenüber herkömmlichen Slit-Scan Verfahren, da aufgrund eines geeignet zu wählenden Rauschfilters höhere Ortsfrequenzen und damit Auflösung verloren geht. Erfindungsgemäß wird stattdessen wie folgt verfahren:

In die Detektionsoptik sind Schlitzblenden mit einem Schlitzverlauf parallel zur Orientierung der Interferenzstreifen einbaut. Mit geeigneten Linsen bilden diese Schlitzblenden nur diejenige Fluoreszenz auf den Photomultiplier ab, die zwischen den beiden ersten Minima des Interferenzhauptstreifens angeregt wird. Im vorliegenden Beispiel können mit einem Aperturwinkel der Detektionsoptik von 19° (in Luft) und einem Minimalab-

stand von ca. 1 μm Objekttrajektorien von 6 μm um die zentrale Flüssigkeitsachse mit nahezu gleicher optischer Auflösung beobachtet bzw. untersucht werden. Um nicht nur eindimensionale Scans zu realisieren, wird der Detektionsschlitz in kleine Rechteckelemente aufgeteilt — z.B. durch eine CCD-Zeile. Diesen CCD-Elementen können signalverstärkende optische Elemente vorgeschaltet sein. Günstigerweise ordnet man die CCD-Elemente in einem möglichst großen Kreissegment um den Flüssigkeitsstrahl an. Die Detektionsoptik kann dann teilweise durch Mikrolinsen vor jedem Element ersetzt werden.

Eine Alternative besteht darin, bei einem Flüssigkeitsstrahl in z-Richtung eine Laseroptik aus Laserstrahl(en) in x-Richtung und Blende(n) und Detektor(en) in y-Richtung anzuordnen, wodurch man eine Verbesserung der Auflösung in zwei Dimesionen erreicht. Bei Anordnung einer weiteren Laseroptik mit Laserstrahl(en) in y-Richtung und Blende(n) und Detektor(en) in x-Richtung erhält man eine Auflösungsverbesserung in drei Dimensionen.

Pro Detektionselement wird von dem Objekt, das sich beliebig orientiert und mit konstanter Geschwindigkeit im Flüssigkeitsstrahl durch den zentralen Laserinterferenzstreifen bewegt, ein Fluoreszenzprofil durch dieses Objekt aufgenommen. Kleine fluoreszierende Meßstrukturen bzw. Kalibriertargets in den biologischen Objekten erscheinen in den Scanprofilen als Intensitätspeaks. Aus den Intensitätsmaxima und der Zuordnung der jeweiligen Scanprofilen zu den CCD-Elementen lassen sich die fluoreszenten Meßstrukturen bzw. Kalibriertargets im Objekt lokalisieren. Dies kann bei gleicher spektraler Signatur z.B. auf einen definierten Objektsbezugspunkt hin geschehen

Bei verschiedener spektraler Signatur kann man z.B. Laserstrahlen verschiedener Wellenlangen und/oder mehrere Detektionseinheiten verwenden Diese werden dann versetzt entlang des Flüssigkeitsstrahls angeordnet. Durch Kalibrierung kann dann die Lokalisation der einzelnen Meßstrukturen bzw. Kalibriertargets unterschiedlicher spektraler Signatur zueinander in Bezug gesetzt werden. Die Kalibrierung und Berechnung erfolgt analog den vorstehend geschilderten Beispielen für die Epifluoreszenz- bzw konfokale Laser-Scanning-Mikroskopie.

**BEISPIEL 6: Einsatz des erfindungsgemäßen Distanzmessungsverfahrens zur optischen Kontrolle von Anordnungen elektronischer Bauelemente (elektronischer Chips)**

Bei der Anordnung von elektronischen Bauelementen (elektronischen Chips) muß die planmäßige Anwesenheit bestimmter Bauelemente und deren geometrische Anordnung überprüft werden Da die handelsüblichen Chipabmessungen sehr gering sind und die einzelnen Bauelemente in enger Nachbarschaft zueinander liegen, sind die erforderlichen Kontrollverfahren nach dem Stand der Technik extrem aufwendig und nicht immer zufriedenstellend genau.

Das erfindungsgemäße Distanzmessungsverfahren ermöglicht nun eine Überprufung der vorgegebenen Anzahl und Anordnung der Bauelemente auf dem Chip auch in solchen Fällen, in denen der Minimalabstand zwischen einzelnen Chips kleiner oder sogar sehr viel kleiner ist als die Halbwertsbreite des Hauptmaximums der effektiven Punktbildfünktion.

Hierzu werden die Bauelemente z.B. auf ihrer Oberfläche mit Fluoreszenzfarbstoffen markiert, wobei zumindest diejenigen Bauelemente, deren Abstand untereinander kleiner als die Halbwertsbreite des Hauptmaximums der effektiven Punktbildfunktion ist, mit Fluoreszenzfarbstoffen unterschiedlicher spektraler Signatur versehen werden.

Die Kontrolle der korrekten Anordnung der Bauelemente kann nun durch optische Analyse unter Einsatz des erfindungsgemäßen Distanzmessungsverfahrens und unter Verwendung beliebiger Fernfeldmikrosokopieverfahren durchgeführt werden, wobei anstelle der herkömmlicherweise notwendigen Objektive mit relativ sehr hoher numerischer Apertur von beispielsweise 1,3 nun ohne weiteres Objektive mit wesentlich geringerer numerischer Apertur eingesetzt werden können, ohne daß dadurch hier relevante Information verloren geht. Mit den Objektiven geringerer Apertur geht ein höherer Arbeitsabstand zwischen Objektiv und Untersuchungsobjekt einher, was die Handhabung wesentlich erleichtert und die Untersuchungen schneller und sicherer macht. Mit dem erfindungsgemäßen Verfahren kann auch die vorschriftsmäßige Anordnung von solchen Bauelementen überprüft werden, deren Abstand untereinander kleiner als 200 nm ist. Das hat den Vorteil, daß auf den Einsatz von technisch sehr aufwendigen optischen Nahfeldverfahren und/oder Verfahren der atomaren Kraftmikroskopie oder der Tunnelelektronenmikroskopie verzichtet werden kann.

Anstelle von elektronischen Chips ist es ebensogut möglich, DNA-Chips oder Protein-Chips in analoger Weise zu überprüfen.

**Patentansprüche**

1. Verfahren für die Fernfeldmikroskopie und Flußfluorometrie zur geometrischen Distanzmessung zwischen Objektstrukturen, wobei die Distanzen geringer sein können als die Halbwertsbreite des Hauptmaximums der effektiven Punktbildfinktion, **dadurch gekennzeichnet,**

    **daß** vor, während oder nach der Präparation des betreffenden Objekts auf einem bzw in einem Objekthalter die zu untersuchenden bzw. zu ortenden Meßstrukturen mit Fluoreszenzfarbstoffen verschiedener oder gleicher spektraler Signatur markiert werden, wobei zumindest solche zu ortenden Meßstrukturen, deren Abstand voneinander geringer ist als die Halbwertsbreite des Hauptmaximums der effektiven Punktbildfunktion, mit Fluoreszenzfarbstoffen verschiedener spektraler Signatur markiert werden,

**daß** mit den gleichen Fluoreszenzfarbstoffen Kalibriertargets definierter Größe und räumlicher Anordnung markiert werden,

**daß** die fluoreszierenden Kalibriertargets entweder zusammen mit den Meßstrukturen in bzw. auf dem Objekthalter oder separat in bzw. auf einem Objekthalter präpariert werden,

**daß** Meßstrukturen und Kalibriertargets unter übereinstimmenden Bedingungen, gleichzeitig oder nacheinander mikroskopisch oder flußfluorometrisch untersucht werden,

und **daß** jeweils zwei definierte Kalibriertargets verschiedener spektraler Signatur unter Berücksichtigung des wellenlängenabhängigen Abbildungs- und Lokalisationsverhaltens des jeweiligen optischen Systems vermessen werden, die dabei ermittelten Messwerte — gleich Ist-Werte — mit den vorbekannten tatsächlichen Distanzwerten — gleich Soll-Werten — verglichen werden, und aus der Differenz zwischen Ist-Werten und Soll-Werten ein Korrekturwert — ist gleich Kalibrierwert — bestimmt wird, mit dem der durch das optische System bedingte Versatz in der Detektion unterschiedlicher Emissionsloci, insbesondere der Meßstrukturen, korrigiert wird.

2. Verfahren nach Anspruch 1, **dadurch gekennzeichnet,**
   **daß** das biologische Objekt während der mikroskopischen Untersuchung axialtomographisch gedreht wird.

3. Verfahren nach Anspruch 2, **dadurch gekennzeichnet,**
   **daß** das biologische Objekt in oder an einem drehbaren Objekthalter (ist gleich Objektträger) mit kreisförmigem, rechteckigem oder vieleckigem Querschnitt fixiert oder in anderer Weise befestigt ist, wobei der Objekthalter hohl oder massiv ist und aus einem für die verwendeten Lichtwellenlängen transparenten Material besteht, dessen Brechungsindex sich um höchstens 12 % von dem des umgebenden Mediums unterscheidet und dessen Querschnittsdurchmesser kleiner oder gleich 300 μm ist

4. Verfahren nach Anspruch 3, **dadurch gekennzeichnet,**
   **daß** die Drehung des im Querschnitt dreieckigen, viereckigen oder vieleckigen Objekthalters um die Winkel $\phi_m$ = 360/3 [°], $\phi_m$ = 360/4 [°], oder $\phi_m$ =

360/n [°] erfolgt, wobei n die Zahl der planaren Seiten des Objekthalters (Objektträgers) ist, und daß bei einem, mehreren, oder jedem dieser Winkel eine Abstandsmessung zwischen den Kalibriertargets und/oder Meßstrukturen für eine oder zwei oder mehrere spektrale Signaturen vorgenommen wird.

5. Verfahren nach einem der Ansprüche 2 bis 4 **dadurch gekennzeichnet,**
   **daß** zur Ermittlung von Ist- und Sollwerten, zu deren Vergleich und zur Bestimmung des Korrekturwertes (ist gleich Kalibrierwert) die folgenden Verfahrensschritte durchgerührt werden:

   - ein oder mehrere Kalibriertargets B mit einem Abstand größer als die Halbwertsbreite des Hauptmaximum der effektiven Punktbildfunktion vom Schwerpunkt von N Meßstrukturen wird/werden mit einer beliebigen spektralen Signatur markiert,
   - die Abstände $d_{ik}$ (i, k = 1... N, i ≠k) der Schwerpunkte der spektral getrennten Beugungsfiguren der N Meßstrukturen und die Abstände $d_{iB}$ der N Meßstrukturen zum Kalibriertarget B werden gemessen, wobei automatisierte Verfahren der Bildanalyse angewendet werden,
   - für eine Meßstruktur werden die Strecken $d_{ik}$ und $d_{iB}$ jeweils in der Ebene der schmalsten Punktbildfunktion sowie alle übrigen Distanzen gemessen, wozu das Objekt axialtomographisch jeweils um einen definierten Winkel $\phi_m$ gedreht wird,
   - optische Aberrationen aus den Kalibrierungsmessungen werden korrigiert, und an die korrigierten gemessenen Abstände $d_{ik}$ ($\phi_m$) und $d_{iB}$ ($\phi_m$) wird jeweils eine Cosinusfunktion $A_{ik}$ cos ($\phi_m + \theta_{ik}$) bzw. $A_{iB}$ cos ($\phi_m + \theta_{iB}$) mit geeigneter Phasenverschiebung angepaßt,
   - die Maxima $A_{ik}$ und $A_{iB}$ der Anpassungsfunktion von $d_{ik}$ bzw. $d_{iB}$ werden durch den Vergrößerungsfaktor dividiert und als euklidischer Abstand $D_{ik}$ bzw. $D_{iB}$ der N Meßstrukturen untereinander bzw. der Abstände der Meßstrukturen zum Kalibriertarget B als Bezugspunkt bestimmt.

6. Verfahren nach Anspruch 5 **dadurch gekennzeichnet,**
   **daß** für die Bestimmung der Maxima zusätzlich das diesem entsprechende Minimum des Abstandes $z_{ik}$, $z_{iB}$ in der zu der Ebene der $d_{ik}$, $d_{iB}$ orthogonalen Ebene herangezogen und analog verfahren wird.

7. Verfahren nach Anspruch 5 oder 6 **dadurch gekennzeichnet,**
   **daß** die 3D-Abstände $D_{ik}$ bzw. $D_{iB}$ in einem Gleichungssystem

$$D^2_{ik} = (x_k - x_i)^2 + (y_k - y_i)^2 + (z_k - z_i)^2$$

$$D^2_{iB} = (x_B - x_i)^2 + (y_B - y_i)^2 + (z_B - z_i)^2$$

$$D^2_{kB} = (x_B - x_k)^2 + (y_B - y_k)^2 + (z_B - z_k)^2$$

zur Berechnung der Positionen $x_i$, $y_i$, $z_i$ und $x_k$, $y_k$, $z_k$ bzw. der Abstände $x_k-x_i$ , $y_k-y_i$ , $z_k-z_i$ und $x_B-x_i$ , $y_B-y_i$ , $z_B -z_i$ , d.h. zur Berechnung aller Koordinaten der N Meßstrukturen und ihrer Relativkoordinaten zum Bezugspunkt B, verwendet werden.

8. Verfahren nach einem der Ansprüche 5 bis 7, **dadurch gekennzeichnet,** **daß** die Koordinaten und Abstände der N Meßstrukturen anhand der Schwerpunkte ermittelt werden, die aus Schwerpunktmittelungen der Messungen zu allen Bezugspunkten bestimmt werden.

9. Verfahren nach einem der Ansprüche 5 bis 8, **dadurch gekennzeichnet,** **daß** die erhaltenen Positionen $x_i$, $y_i$, $z_i$ und $x_B$, $y_B$, $z_B$ mit einer Punktbildfunktion gefaltet werden, die eine Halbwertsbreite mit dem jeweils erreichten Auflösungsäquivalent besitzt, und anschließend nach bekannten Verfahren graphisch dargestellt werden.

10. Verfahren nach einem der Ansprüche 1 bis 9, **dadurch gekennzeichnet,** **daß** die zu ortende(n) Meßstruktur(en) mit Fluorochromen verschiedener spektraler Signatur und gleicher Dynamik markiert ist/sind.

11. Verfahren nach einem der Ansprüche 1 bis 10, **dadurch gekennzeichnet,** **daß** als Kalibriertargets markierte Regionen bekannter Distanz des biologischen Objekts verwendet werden.

12. Verfahren nach einem der Ansprüche 1 bis 11, **dadurch gekennzeichnet,** **daß** als Kalibriertargets Mikrokügelchen mit gleicher oder höherer multispektraler Signatur als die zu ortenden Meßstrukturen verwendet werden.

13. Verfahren nach Anspruch 12, **dadurch gekennzeichnet,** **daß** die Kalibriertargets auf Objekthaltern in definierter Raumanordnung fixiert sind.

14. Verfahren nach einem der Ansprüche 1 bis 13 unter Verwendung eines Laser-Scan-Flußfluorometers mit einem Durchflußcytometer, das einen frei oder in einer Küvette strömenden Flüssigkeitsstrahl umfaßt, mit einer oder mehreren Laserstrahlquelle(n), deren Laserstrahl(en) auf die zentrale Trajektorie des Flüssigkeitsstrahls fokussiert sind, und mit einem Detektionssystem aus Detektor(en), Linse(n) und Blende(n), **dadurch gekennzeichnet,** **daß** der/die Laserstrahl(en) bandförmig auf die Objekttrajektorie fokussiert ist/sind.

15. Verfahren nach Anspruch 14, **dadurch gekennzeichnet,** **daß** die Bandform des/der Laserstrahls/Laserstrahlen durch Interferenzstreifen zweier oder mehrerer sich kreuzender Teilstrahlen erzeugt wird.

16. Verfahren nach Anspruch 15, **dadurch gekennzeichnet,** **daß** die Linsen und Blenden im Detektionsstrahlengang derart ausgewählt und angeordnet sind, daß allein die Fluoreszenzemission aus dem zentralen Interferenzstreifen auf den/die Detektor(en) abgebildet wird.

17. Verfahren nach einem der Ansprüche 14 bis 16, **dadurch gekennzeichnet,** **daß** der/die Detektor(en) in einzelne Detektionspixel aufgeteilt ist/sind und zur räumlichen Auflösung der Fluoreszenzemission sowohl in Flußrichtung als auch senkrecht zur Flußrichtung geeignet ist/ sind.

18. Halterung für einen Objekthalter zur Durchführung eines Verfahrens nach einem der Ansprüche 1 bis 13, bestehend aus einem starren, vorzugsweise dorsiventral abgeplatteten Rahmen (1) mit im wesentlichen der gleichen Länge, Breite und Höhe wie ein herkömmliches Glasobjekträgerplättchen gemäß DIN 58884, an bzw. auf dem wenigstens eine Lagerbuchse (2) montiert ist, in der ein röhren- oder rinnenförmiger Objekthalter, insbesondere eine Mikrokapillare oder eine Glasfaser, um seine (ihre) Längsachse rotierbar und mit der Rotationsachse senkrecht zur optischen Achse des Mikroskops lagerbar ist, wobei die Lagerbuchse(n) derart angeordnet sind, daß die Rotationsachse der Kapillare/ Faser senkrecht zur optischen Achse des Mikroskops verläuft, und daß wenigstens ein Endabschnitt des röhren- oder rinnenförmigen Objekthalters als Angriffsort für eine Drehkraft zur Drehung des Objekthalters zugänglich ist.

19. Halterung nach Anspruch 18, **dadurch gekennzeichnet,** **daß** ein austauschbarer Einsatz für den Rahmen vorgesehen ist, der dazu geeignet ist, die Ausnehmung des Rahmens ganz oder teilweise abzudecken, und der vorzugsweise aus Plastik oder Glas besteht.

**20.** Halterung nach Anspruch 19 **dadurch gekennzeichnet,**
**daß** der Einsatz eine grabenförmige Vertiefung in Längsrichtung des röhren- oder rinneförmigen Objekthalters aufweist.

## Claims

**1.** A method of far-field microscopy and flow fluorimetry for geometric distance measurement between object structures, whereby the distances may be smaller than the half-width value of the principal maximum of the effective point image function, **characterised in**

that before, during or after the preparation of the relevant object on or in an object holder, the measuring structures to be examined or located are marked with fluorescence dyes with a different or identical spectral signature, whereby at least such measuring structures to be located, which are a distance from each other of less than the half-width value of the principal maximum of the effective point image function, are marked with fluorescence dyes with a different spectral structure,

that calibration targets of defined size and spatial arrangement are marked with the same fluorescence dyes,

that the fluorescing calibration targets are prepared either together with the measuring structures in or on the object holder, or separately in or on an object holder,

that measuring structures and calibration targets are examined microscopically or flow fluorometrically under corresponding conditions, simultaneously or consecutively,

and that two defined calibration targets with a different spectral signature are measured taking into account the wavelength-dependent imaging and localisation behaviour of the relevant optical system, with the recorded measurements - equivalent to the actual values - being compared with the previously known actual distances values - equivalent to set values, and the difference between the actual and set values being used to determine a correction value - equivalent to the calibration value, with which the misalignment in the detection of different measuring loci, more particularly the measuring structures, caused by the optical system is corrected.

**2.** The method according to claim 1, **characterised in that** the biological object is axial-tomographically rotated during examination under the microscope.

**3.** The method according to claim 2, **characterised in that** the biological object is fixed in or on a rotatable object holder (equivalent to an object slide) with an annular, rectangular or polygonal cross-section, or in another manner, whereby the object holder is hollow or solid and consists of a material that is transparent for the llight wavelengths being used, the refractive index of which differs by a maximum of 12 % from that of the surrounding medium and the cross-section diameter of which is less than or equal to 300 $\mu$m.

**4.** The method according to claim 3, **characterised in that** the rotation of the object holder with a triangular, rectangular or polygonal cross-section take place about the angles $\phi_m = 360/3$ [°], $\phi_m = 360/4$ [°] or $\phi_m = 360/n$ [°], where n is the number of planar sides of the object holder (object slide), and that at one, or each of the angles, a distance measurement between the calibration target and/or measuring structures is carried out for one or two or more spectral signatures.

**5.** The method according to any one of claims 2 to 4, **characterised in that** to determine the actual and set values, to compare them and to determine the correction value (equivalent to the calibration value), the following processing steps are carried out:

- one or more calibration targets B with a distance greater than the half-width value of the principal maximum of the effective point image function from the centre of mass of N measuring structures is/are marked with an arbitrary spectral signal,

- the distances $d_{ik}$ (i, k = l ... N i $\neq$ k) of the centres of mass of the spectrally separated diffraction figures of the N measuring structures and the distances $d_{iB}$ of the N measuring structures to the calibration target B are measured, whereby automated image analysis processes are used,

- for a measuring structure the distances $d_{ik}$ and $d_{iB}$ are measured at the narrowest point image function are measured in each case as well as all other distances, for which the object is axialtomographically turned about an defined angle $\phi_m$ each time,

- optical aberrations in the calibration measurements are corrected, and a cosine function $A_{ik}$ cos ($\phi_m + \theta_{ik}$) or $A_{iB}$ cos ($\phi_m + \theta_{iB}$) with suitable phase shifting is adjusted to the corrected

measured distances $d_{ik}(\theta_m)$ and $d_{iB}(\phi_m)$,

- the maxima $A_{ik}$ and $A_{iB}$ of the adjustment function of $d_{ik}$ and $d_{iB}$ are divided by the enlargement factor and determined as euclidian distance $D_{ik}$ aand $D_{iB}$ of the N structures with regard to each other or the distances of the measuring structures to the calibration target B as reference point.

6. The method according to claim 5, **characterised in that** for determining the maxima the corresponding minimum distance $z_{ik}$, $z_{iB}$ at the level orthogonal to the level of $d_{ik}$, $d_{iB}$ is also included and the same process used.

7. The method according to claim 5 or 6, **characterised in that** the 3D distances $D_{ik}$ and $D_{iB}$ are used in an equation system

$$D^2_{ik} = (x_k - x_i)^2 + (y_k - y_i)^2 + (z_k - z_i)^2$$

$$D^2_{iB} = (x_B - X_i)^2 + (y_B - y_i)^2 + (z_B - z_i)^2$$

$$D^2_{kB} = (x_B - x_k)^2 + (y_B - y_k)^2 + (z_B - z_k)^2$$

for calculating the positions $x_i$, $y_i$, $z_i$ and the distances $x_k$-$x_i$, $y_k$-$y_i$, $z_k$-$z_i$ and $x_B$-$x_i$, $y_B$-$y_i$, $z_B$-$z_i$, i.e. for determining all the co-ordinates of the N measuring structures and their relative co-ordinates to reference point B.

8. The method according to claims 5 to 7, **characterised in that** the co-ordinates and distances of the N measuring structures are determined using the centres of mass of the measurements of all the references points.

9. The method according to any one of claims 5 to 8, **characterised in that** the obtained positions $x_i$, $y_i$, $z_i$ and $x_B$, $y_B$, $z_B$ are folded with a point image function, which has a half-width value with the attained resolution equivalent in each case, and are then shown in graph form using known means.

10. The method according to any one of claims 1 to 9, **characterised in that** the measuring structure(s) to be located is/are marked with fluorochromes with different spectral signatures and the same dynamics.

11. The method according to any one of claims 1 to 10, **characterised in that** regions at a known distance from the biological object are used as calibration targets.

12. The method according to any one of claims 1 to 11, **characterised in that** as calibration targets, microspheres with the same or higher multispectral signature than the measuring structures to be located are used.

13. The method according to claim 12, **characterised in that** the calibration targets are attached to object holders in a defined spatial arrangement.

14. The method according to any one of claims 1 to 13 using a laser scan flow fluorometer with a throughflow cytometer that comprises a fluid stream flowing freely or in a cuvette, with one or more laser beam source(s), the laser beam(s) of which is/are focussed on the central trajectory of the fluid stream, and with a detection system composed of detector(s), lens(es) and aperture(s), **characterised in that** the laser beam(s) is/are focussed in the form of bands on the object trajectory.

15. The method according to claim 14, **characterised in that** the band form of the laser beam(s) is produced by the interference strips of two or more partial beams crossing each other.

16. The method according to claim 15, **characterised in that** the lenses and apertures in the detection beam are selected and arranged in such a way that only the fluorescence emission from the central interference strips are shown on the detector(s).

17. The method according to one of claims 14 to 16, **characterised in that** the detector(s) is/are divided into individual detection pixels and is/are suitable for the spatial resolution of the fluorescence emission both in the direction of flow as well as perpendicular to the direction of flow.

18. A holder for an object holder for implementing the method according to any one of claims 1 to 13, comprising a rigid, preferably dorsiventrally flattened frame (1) of essentially the same length, width and height as a conventional glass object slide in accordance with DIN 58884, to or on which a least one bearing bush (2) is fitted, in which a tubular or grooved object holder, more particularly a microcapillary or glass fibre, can be rotated about its longitudinal axis and borne with the axis of rotation perpendicular to the optical axis of the microscope, the bearing bush(es) being arranged in such a way that the axis of rotation of the capillary/fibre runs perpendicular to the optical axis of the microscope, and that at least one end section of the tubular or grooved object holder is accessible as a point of application for a turning force to rotate the object holder.

**19.** The holder according to claim 18, **characterised in that** an replaceable insert for the frame is provided, which is suitable for partially or fully covering the recess in the frame and is preferably made of plastic or glass.

**20.** The holder according to claim 19, **characterised in that** the insert has a trench-like recess in the longitudinal direction of the tubular or grooved object holder.

## Revendications

**1.** Procédé pour la microscopie à champ lointain et la fluorimétrie en flux pour la mesure de distances géométriques entre des structures d'objets, dans lequel les distances peuvent être inférieures à la largeur à mi-hauteur du maximum principal de la transformée ponctuelle effective, **caractérisé en ce que**,

avant, pendant et après la préparation de l'objet en question, sur ou dans un support d'objet, les structures de mesure à examiner ou à localiser sont marquées par des colorants à fluorescence d'une signature spectrale différente ou identique, où au moins les structures de mesure à localiser dont la distance de séparation mutuelle est inférieure à la largeur à mi-hauteur du maximum principal de la transformée ponctuelle effective, sont marquées par des colorants à fluorescence d'une signature spectrale différente,

des cibles d'étalonnage d'une taille définie et d'une disposition spatiale définie sont marquées par les mêmes colorants à fluorescence,

les cibles d'étalonnage fluorescentes sont préparées conjointement avec les structures de mesure dans ou sur le support d'objet ou de manière séparée dans ou sur un support d'objet,

les structures de mesure et les cibles d'étalonnage sont examinées en même temps ou successivement, de façon microscopique ou par fluorimétrie en flux dans des conditions concordantes,

et à chaque fois deux cibles d'étalonnage définies de signature spectrale différente sont mesurées en tenant compte de la performance du système optique respectif en ce qui concerne la formation d'image et la localisation, laquelle dépend de la longueur d'onde, les valeurs mesurées ainsi déterminées - à savoir les valeurs réelles - sont comparées avec les valeurs de distance effectives connues au préalable - à savoir, les valeurs prescrites - et une valeur de correction - qui est égale à la valeur d'étalonnage - est déterminée à partir de la différence entre les valeurs actuelles et les valeurs prescrites, valeur avec laquelle on corrige l'écart conditionné par le système optique dans la détection de différents lieux d'émission, en particulier des structures de mesure.

**2.** Procédé selon la revendication 1, **caractérisé en ce que** l'objet biologique est tourné de façon axiale et tomographique pendant l'examen microscopique.

**3.** Procédé selon la revendication 2, **caractérisé en ce que** l'objet biologique est fixé dans ou sur un support d'objet rotatif (identique à un porte-objet) avec une section circulaire, rectangulaire ou polygonale, ou fixé d'une autre façon, le support de l'objet étant creux ou massif et constitué d'une matière transparente pour les longueurs d'onde lumineuses employées, dont l'indice de réfraction diffère d'au plus de 12 % de celui du milieu environnant et dont le diamètre de section est inférieur ou égale à 300 μm.

**4.** Procédé selon la revendication 3, **caractérisé en ce que** la rotation du support d'objet à section triangulaire, rectangulaire ou polygonale a lieu selon les angles $\phi_m$ = 360/3 [°], $\phi_m$ = 360/4 [°], ou $\phi_m$ = 360/n [°], n étant le nombre de faces planes du support d'objet (porte-objet) et **en ce que** l'on procède à une mesure de distance entre la cible d'étalonnage et/ou les structures de mesure pour une ou deux ou plusieurs signatures spectrales selon un, plusieurs de ces angles ou chacun de ses angles.

**5.** Procédé selon l'une quelconque des revendications 2 à 4, **caractérisé en ce que** pour déterminer les valeurs actuelles et prescrites et les comparer et déterminer la valeur de correction (est identique à la valeur d'étalonnage), on réalise les étapes de procédé suivantes :

- on marque une ou plusieurs cibles d'étalonnage B ayant une distance supérieure à la largeur à mi-hauteur du maximum principal de la transformée ponctuelle effective du barycentre de N structures de mesure, avec une signature spectrale quelconque,

- on mesure les distances $d_{ik}$ (i, k = l...N, i≠k) des barycentres des figures de diffraction séparées spectralement des N structures de mesure et les distances $d_{iB}$ des N structures de mesure pour la cible d'étalonnage B, un procédé automatisé étant employé pour l'analyse d'image,

- pour une structure de mesure, on mesure respectivement les intervalles $d_{ik}$ et $d_{iB}$ dans le plan de la transformée ponctuelle la plus étroite ainsi que toutes les distances restantes, en faisant tourner à cet effet l'objet de façon axiale et tomographique à chaque fois d'un angle défini $\phi_m$,

- on corrige les aberrations optiques provenant des mesures d'étalonnage et on ajuste respectivement une fonction cosinus $A_{iK} \cos (\phi_m + \theta_{ik})$ ou $A_{iB} \cos (\phi_m + \theta_{iB})$ avec un déphasage approprié aux distances mesurées corrigées $d_{ik}$ $(\phi_m)$ et $d_{iB} (\phi_m)$,

- les maxima $A_{iK}$ et $A_{iB}$ de la fonction d'adaptation de $D_{ik}$ ou de $D_{iB}$ sont divisés par le facteur d'amplification et déterminés en tant que distances euclidiennes $d_{ik}$ ou $d_{iB}$ de séparation des N structures de mesure ou en tant que distances des structures de mesure à la cible d'étalonnage B comme point de référence.

6. Procédé selon la revendication 5, **caractérisé en ce que**, pour déterminer les maxima, l'on fait intervenir en plus le minimum correspondant de la distance $Z_{ik}$, $Z_{iB}$, dans le plan orthogonal au plan des $d_{ik}$, $d_{iB}$ et que l'on procède de façon analogue.

7. Procédé selon la revendication 5 ou 6, **caractérisé en ce que** les distances tridimensionnelles $D_{ik}$, ou $D_{iB}$ sont employées dans un système d'équations

$$D^2_{ik} = (x_k - x_i)^2 + (y_k - y_i)^2 + (z_k - z_i)^2$$

$$D^2_{iB} = (x_B - x_i)^2 + (y_B - y_i)^2 + (z_B - z_i)^2$$

$$D^2_{kB} = (x_B - x_k)^2 + (y_B - y_k)^2 + (z_B - z_k)^2$$

pour calculer les positions $x_i$, $y_i$, $z_i$, et $x_k$, $y_k$, $z_k$, ou les distances $x_k$-$x_i$, $y_k$-$y_k$, $z_k$-$z_i$, et $x_B$-$x_i$, $y_B$-$y_i$, $z_B$-$z_i$, à savoir pour calculer toutes les coordonnées des N structures de mesure et leurs coordonnées relatives par rapport au point de référence B.

8. Procédé selon l'une quelconque des revendications 5 à 7, **caractérisé en ce que** les coordonnées et les distances des N structures de mesure sont déterminées à l'aide des barycentres, qui sont déterminés par rapport à tous les points de référence en faisant des moyennes barycentriques sur les mesures.

9. Procédé selon l'une quelconque des revendications 5 à 8, **caractérisé en ce que** les positions obtenues $x_i$, $y_i$, $z_i$, et $x_B$, $y_B$, $z_B$, sont convoluées avec une transformée ponctuelle qui possède une largeur à mi-hauteur ayant l'équivalent de résolution respectivement atteint, et on les représente ensuite graphiquement selon des procédés connus.

10. Procédé selon l'une quelconque des revendications 1 à 9, **caractérisé en ce que** le ou les structures de mesure à localiser sont marquées par des fluorochromes de signature spectrale différente et de dynamique identique.

11. Procédé selon l'une quelconque des revendications 1 à 10, **caractérisé en ce que** l'on emploie des régions marquées comme cible d'étalonnage, à une distance connue de l'objet biologique.

12. Procédé selon l'une quelconque des revendications 1 à 11, **caractérisé en ce que** l'on emploie en tant que cibles d'étalonnage, des microsphères ayant une signature multispectrale identique ou supérieure à celle des structures de mesure à localiser.

13. Procédé selon la revendication 12, **caractérisé en ce que** les cibles d'étalonnage sont fixées sur des supports d'objet selon une disposition spatiale définie.

14. Procédé selon l'une quelconque des revendications 1 à 13, avec emploi d'un fluorimètre en flux et à balayage laser avec un cytomètre en flux qui comprend un jet de liquide s'écoulant librement ou dans une cuvette, avec une ou plusieurs sources de rayons laser, dont le ou les rayons laser sont focalisés sur la trajectoire centrale du jet de liquide, et avec un système de détection constitué de détecteur(s), de lentille(s) et de diaphragme(s), **caractérisé en ce que** le ou les rayons laser sont focalisés en formant une bande sur la trajectoire d'objet.

15. Procédé selon la revendication 14, **caractérisé en ce que** la forme de bande du ou des rayons laser est produite par des bandes d'interférence de deux ou plusieurs rayons partiels qui se croisent.

16. Procédé selon la revendication 15, **caractérisé en ce que** les lentilles et diaphragmes dans le trajet du faisceau de détection sont choisis et disposés de telle façon que seule l'émission de fluorescence provenant de la bande centrale d'interférence forme une image sur le ou les détecteur(s).

17. Procédé selon l'une quelconque des revendications 14 à 16, **caractérisé en ce que** le ou les détecteurs sont divisés en pixels individuels de détection et conviennent à la résolution spatiale de l'émission de fluorescence aussi bien dans la direction d'écoulement que perpendiculairement à la direction d'écoulement.

18. Fixation pour un support d'objet en vue de réaliser un procédé selon l'une quelconque des revendications 1 à 13, constituée d'un cadre (1) rigide, de préférence aplatie de façon dorsiventrale avec essentiellement la même longueur, largeur et hauteur qu'une lame porte-objet en verre classique selon DIN 58884, contre ou sur lequel est montée au moins une douille de palier (2), dans laquelle un support d'objet en forme de tube ou de rainure, en particulier un microcapillaire ou une fibre optique, peut tourner autour de son (leur) axe longitudinal et être monté avec l'axe de rotation perpendiculaire à l'axe optique du microscope, les douille(s) de palier étant disposées de sorte que l'axe de rotation des capillaires/fibres se prolonge perpendiculairement à l'axe optique du microscope et qu'au moins une section d'extrémité du support d'objet en forme de tube ou rainure est accessible en tant que point d'attaque pour une force de rotation en vue de faire tourner le support d'objet.

19. Fixation selon la revendication 18, **caractérisée en ce qu'**un insert échangeable est prévu pour le cadre, qui convient encore au recouvrement total ou partiel du creux du cadre et qui est constitué de préférence, de matière plastique ou de verre.

20. Fixation selon la revendication 19, **caractérisée en ce que**, l'insert présente une dépression en forme de tranchée dans la direction longitudinale du support d'objet en forme de tube ou de rainure.

Fig. 1